# EUROPEAN PATENT APPLICATION

(11) **EP 4 482 197 A1**
(43) Date of publication of application: **25.12.2024**
(21) Application number: 24181717.0
(22) Date of filing: 12.06.2024
(51) Int. Cl.: H04W 24/02, H04W 76/00, H04W 88/06, H04W 88/16, H04W 92/12, H04W 92/20

(54) **SEAMLESS CONVERGED BROADBAND SERVICE**

(30) Priority: 23.06.2023 US 202318340818
(71) Applicant: Nokia Solutions and Networks Oy, 02610 Espoo (FI)
(72) Inventor: DION, Gino, Quispamsis, E2G0E6 (CA); TURNBULL-FLETT, Lisa, Rothesay, E2G 2B5 (CA); HINGLEY, Jamie, Rothesay, E2E2H6 (CA); BOUTILIER, Steve, Lower Sackville, B4C2W7 (CA); ADDALA GAJAPATHY, Suresh Babu, 600099 Chennai (IN)
(74) Representative: Zinsinger, Norbert

(57) **Abstract**

Various example embodiments for supporting seamless converged broadband service are presented herein. Various example embodiments for supporting seamless converged broadband service may be configured to use a client device at a customer location to provide network connectivity for a customer premises gateway device at the customer location. Various example embodiments for supporting seamless converged broadband service may be configured to use a wireless hotspot of a client device at a customer location to provide network connectivity for a customer premises gateway device at the customer location.

## Description

### TECHNICAL FIELD

Various example embodiments relate generally to communication systems and, more particularly but not exclusively, to providing seamless converged broadband service at customer locations.

### BACKGROUND

In communication networks, various communications technologies may be used to support various types of communications.

### SUMMARY

In at least some example embodiments, an apparatus includes at least one processor and at least one memory storing instructions that, when executed by the at least one processor, cause the apparatus at least to receive, at a client device, a notification of an intention of a customer premises gateway device to communicate via the client device, deactivate, at the client device, a wireless connection from the client device to the customer premises gateway device, activate, at the client device, a wireless hotspot of the client device, and support, at the client device using the wireless hotspot of the client device, connection of the customer premises gateway device to the client device. In at least some example embodiments, the notification of the intention of the customer premises gateway device to communicate via the client device is based on a condition associated with a broadband connection from the customer premises gateway device to a broadband communication network. In at least some example embodiments, the notification of the intention of the customer premises gateway device to communicate via the client device is received via the wireless connection from the client device to the customer premises gateway device. In at least some example embodiments, the notification of the intention of the customer premises gateway device to communicate via the client device is based on an application programming interface call. In at least some example embodiments, the instructions, when executed by the at least one processor, cause the apparatus at least to support, by the client device, communication of traffic for a set of customer premises equipments supported by the customer premises gateway device via the wireless hotspot of the client device and a wide area wireless connection of the client device to a wireless access network. In at least some example embodiments, the instructions, when executed by the at least one processor, cause the apparatus at least to send, by the client device toward the customer premises gateway device, an indication of an availability of the client device to provide the wireless hotspot for use by the customer premises gateway device in event of a condition associated with a broadband connection from the customer premises gateway device to a broadband communication network. In at least some example embodiments, the indication of the availability of the client device to provide the wireless hotspot for use by the customer premises gateway device is provided periodically. In at least some example embodiments, the instructions, when executed by the at least one processor, cause the apparatus at least to send, by the client device toward the customer premises gateway device, telemetry of the client device. In at least some example embodiments, the telemetry of the client device includes at least one of a battery status of the client device, a received signal strength indicator of a WiFi connection of the client device to the customer premises gateway device, or a wireless signal strength of a wide area wireless connection of the client device to a wireless access network. In at least some example embodiments, the instructions, when executed by the at least one processor, cause the apparatus at least to support, at the client device, a containerized application configured to control the detect, deactivate, and activate functions at the client device.

In at least some example embodiments, a non-transitory computer readable medium includes computer program instructions that, when executed by an apparatus, cause the apparatus at least to receive, at a client device, a notification of an intention of a customer premises gateway device to communicate via the client device, deactivate, at the client device, a wireless connection from the client device to the customer premises gateway device, activate, at the client device, a wireless hotspot of the client device, and support, at the client device using the wireless hotspot of the client device, connection of the customer premises gateway device to the client device. In at least some example embodiments, the notification of the intention of the customer premises gateway device to communicate via the client device is based on a condition associated with a broadband connection from the customer premises gateway device to a broadband communication network. In at least some example embodiments, the notification of the intention of the customer premises gateway device to communicate via the client device is received via the wireless connection from the client device to the customer premises gateway device. In at least some example embodiments, the notification of the intention of the customer premises gateway device to communicate via the client device is based on an application programming interface call. In at least some example embodiments, the computer program instructions, when executed by the apparatus, cause the apparatus at least to support, by the client device, communication of traffic for a set of customer premises equipments supported by the customer premises gateway device via the wireless hotspot of the client device and a wide area wireless connection of the client device to a wireless access network. In at least some example embodiments, the computer program instructions, when executed by the apparatus, cause the apparatus at least to send, by the client device toward the customer premises gateway device, an indication of an availability of the client device to provide the wireless hotspot for use by the customer premises gateway device in event of a condition associated with a broadband connection from the customer premises gateway device to a broadband communication network. In at least some example embodiments, the indication of the availability of the client device to provide the wireless hotspot for use by the customer premises gateway device is provided periodically. In at least some example embodiments, the computer program instructions, when executed by the apparatus, cause the apparatus at least to send, by the client device toward the customer premises gateway device, telemetry of the client device. In at least some example embodiments, the telemetry of the client device includes at least one of a battery status of the client device, a received signal strength indicator of a WiFi connection of the client device to the customer premises gateway device, or a wireless signal strength of a wide area wireless connection of the client device to a wireless access network. In at least some example embodiments, the computer program instructions, when executed by the apparatus, cause the apparatus at least to support, at the client device, a containerized application configured to control the detect, deactivate, and activate functions at the client device.

In at least some example embodiments, a method includes receiving, at a client device, a notification of an intention of a customer premises gateway device to communicate via the client device, deactivating, at the client device, a wireless connection from the client device to the customer premises gateway device, activating, at the client device, a wireless hotspot of the client device, and supporting, at the client device using the wireless hotspot of the client device, connection of the customer premises gateway device to the client device. In at least some example embodiments, the notification of the intention of the customer premises gateway device to communicate via the client device is based on a condition associated with a broadband connection from the customer premises gateway device to a broadband communication network. In at least some example embodiments, the notification of the intention of the customer premises gateway device to communicate via the client device is received via the wireless connection from the client device to the customer premises gateway device. In at least some example embodiments, the notification of the intention of the customer premises gateway device to communicate via the client device is based on an application programming interface call. In at least some example embodiments, the method includes supporting, by the client device, communication of traffic for a set of customer premises equipments supported by the customer premises gateway device via the wireless hotspot of the client device and a wide area wireless connection of the client device to a wireless access network. In at least some example embodiments, the method includes sending, by the client device toward the customer premises gateway device, an indication of an availability of the client device to provide the wireless hotspot for use by the customer premises gateway device in event of a condition associated with a broadband connection from the customer premises gateway device to a broadband communication network. In at least some example embodiments, the indication of the availability of the client device to provide the wireless hotspot for use by the customer premises gateway device is provided periodically. In at least some example embodiments, the method includes sending, by the client device toward the customer premises gateway device, telemetry of the client device. In at least some example embodiments, the telemetry of the client device includes at least one of a battery status of the client device, a received signal strength indicator of a WiFi connection of the client device to the customer premises gateway device, or a wireless signal strength of a wide area wireless connection of the client device to a wireless access network. In at least some example embodiments, the method includes supporting, at the client device, a containerized application configured to control the detect, deactivate, and activate functions at the client device.

In at least some example embodiments, an apparatus includes means for receiving, at a client device, a notification of an intention of a customer premises gateway device to communicate via the client device, means for deactivating, at the client device, a wireless connection from the client device to the customer premises gateway device, means for activating, at the client device, a wireless hotspot of the client device, and means for supporting, at the client device using the wireless hotspot of the client device, connection of the customer premises gateway device to the client device. In at least some example embodiments, the notification of the intention of the customer premises gateway device to communicate via the client device is based on a condition associated with a broadband connection from the customer premises gateway device to a broadband communication network. In at least some example embodiments, the notification of the intention of the customer premises gateway device to communicate via the client device is received via the wireless connection from the client device to the customer premises gateway device. In at least some example embodiments, the notification of the intention of the customer premises gateway device to communicate via the client device is based on an application programming interface call. In at least some example embodiments, the apparatus includes means for supporting, by the client device, communication of traffic for a set of customer premises equipments supported by the customer premises gateway device via the wireless hotspot of the client device and a wide area wireless connection of the client device to a wireless access network. In at least some example embodiments, the apparatus includes means for sending, by the client device toward the customer premises gateway device, an indication of an availability of the client device to provide the wireless hotspot for use by the customer premises gateway device in event of a condition associated with a broadband connection from the customer premises gateway device to a broadband communication network. In at least some example embodiments, the indication of the availability of the client device to provide the wireless hotspot for use by the customer premises gateway device is provided periodically. In at least some example embodiments, the apparatus includes means for sending, by the client device toward the customer premises gateway device, telemetry of the client device. In at least some example embodiments, the telemetry of the client device includes at least one of a battery status of the client device, a received signal strength indicator of a WiFi connection of the client device to the customer premises gateway device, or a wireless signal strength of a wide area wireless connection of the client device to a wireless access network. In at least some example embodiments, the apparatus includes means for supporting, at the client device, a containerized application configured to control the detect, deactivate, and activate functions at the client device.

In at least some example embodiments, an apparatus includes at least one processor and at least one memory storing instructions that, when executed by the at least one processor, cause the apparatus at least to send, by a customer premises gateway device toward a client device in response to detection of a condition associated with a broadband connection from the customer premises gateway device to a broadband communication network, a notification of an intention of the customer premises gateway device to communicate via the client device, switch, by the customer premises gateway device, a wireless radio of the customer premises gateway device from operating in an access mode to operating in a client mode, and connect, by the customer premises gateway device using the wireless radio of customer premises gateway device based on the client mode, to a wireless hotspot of the client device. In at least some example embodiments, the condition associated with the broadband connection from the customer premises gateway device to the broadband communication network includes an unavailability of the broadband connection from the customer premises gateway device to the broadband communication network or the broadband connection from the customer premises gateway device to the broadband communication network having a particular quality level. In at least some example embodiments, the condition associated with the broadband connection from the customer premises gateway device to the broadband communication network is based on at least one of a Layer 2 (L2) condition, a Layer 3 (L3) condition, or a Layer 4 (L4) condition. In at least some example embodiments, the broadband communication network includes at least one of a fiber optic network, a cable network, a digital subscriber line network, a fixed wireless access network, an Ethernet network, or a satellite network. In at least some example embodiments, the notification of the intention of the customer premises gateway device to communicate via the client device is sent via a wireless connection between the customer premises gateway device and the client device. In at least some example embodiments, the notification of the intention of the customer premises gateway device to communicate via the client device is sent using an application programming interface call. In at least some example embodiments, the instructions, when executed by the at least one processor, cause the apparatus at least to support, by the customer premises gateway device, communication of traffic of a set of customer premises equipments supported by the customer premises gateway device via the wireless hotspot of the client device. In at least some example embodiments, the instructions, when executed by the at least one processor, cause the apparatus at least to receive, by the customer premises gateway device from the client device, an indication of an availability of the client device to provide the wireless hotspot for use by the customer premises gateway device and register, by the customer premises gateway device, the client device as an available client device that is available to support the customer premises gateway device. In at least some example embodiments, the instructions, when executed by the at least one processor, cause the apparatus at least to select, by the customer premises gateway device from a set of available client devices including the client device, the client device to provide the wireless hotspot for use by the customer premises gateway device. In at least some example embodiments, the instructions, when executed by the at least one processor, cause the apparatus at least to receive, by the customer premises gateway device from the client device, telemetry of the client device and select, by the customer premises gateway device based on the telemetry of the client device, the client device to provide the wireless hotspot for use by the customer premises gateway device. In at least some example embodiments, the instructions, when executed by the at least one processor, cause the apparatus at least to control, by the customer premises gateway device while the customer premises gateway device is connected to the wireless hotspot of the client device, communications of customer premises equipments via the wireless hotspot of the client device based on at least one of a traffic type or a device type. In at least some example embodiments, the instructions, when executed by the at least one processor, cause the apparatus at least to support a containerized application configured to control the send, switch, and connect functions at the customer premises gateway device.

In at least some example embodiments, a non-transitory computer readable medium includes computer program instructions that, when executed by an apparatus, cause the apparatus at least to send, by a customer premises gateway device toward a client device in response to detection of a condition associated with a broadband connection from the customer premises gateway device to a broadband communication network, a notification of an intention of the customer premises gateway device to communicate via the client device, switch, by the customer premises gateway device, a wireless radio of the customer premises gateway device from operating in an access mode to operating in a client mode, and connect, by the customer premises gateway device using the wireless radio of customer premises gateway device based on the client mode, to a wireless hotspot of the client device. In at least some example embodiments, the condition associated with the broadband connection from the customer premises gateway device to the broadband communication network includes an unavailability of the broadband connection from the customer premises gateway device to the broadband communication network or the broadband connection from the customer premises gateway device to the broadband communication network having a particular quality level. In at least some example embodiments, the condition associated with the broadband connection from the customer premises gateway device to the broadband communication network is based on at least one of a Layer 2 (L2) condition, a Layer 3 (L3) condition, or a Layer 4 (L4) condition. In at least some example embodiments, the broadband communication network includes at least one of a fiber optic network, a cable network, a digital subscriber line network, a fixed wireless access network, an Ethernet network, or a satellite network. In at least some example embodiments, the notification of the intention of the customer premises gateway device to communicate via the client device is sent via a wireless connection between the customer premises gateway device and the client device. In at least some example embodiments, the notification of the intention of the customer premises gateway device to communicate via the client device is sent using an application programming interface call. In at least some example embodiments, the computer program instructions, when executed by the apparatus, cause the apparatus at least to support, by the customer premises gateway device, communication of traffic of a set of customer premises equipments supported by the customer premises gateway device via the wireless hotspot of the client device. In at least some example embodiments, the computer program instructions, when executed by the apparatus, cause the apparatus at least to receive, by the customer premises gateway device from the client device, an indication of an availability of the client device to provide the wireless hotspot for use by the customer premises gateway device and register, by the customer premises gateway device, the client device as an available client device that is available to support the customer premises gateway device. In at least some example embodiments, the computer program instructions, when executed by the apparatus, cause the apparatus at least to select, by the customer premises gateway device from a set of available client devices including the client device, the client device to provide the wireless hotspot for use by the customer premises gateway device. In at least some example embodiments, the computer program instructions, when executed by the apparatus, cause the apparatus at least to receive, by the customer premises gateway device from the client device, telemetry of the client device and select, by the customer premises gateway device based on the telemetry of the client device, the client device to provide the wireless hotspot for use by the customer premises gateway device. In at least some example embodiments, the computer program instructions, when executed by the apparatus, cause the apparatus at least to control, by the customer premises gateway device while the customer premises gateway device is connected to the wireless hotspot of the client device, communications of customer premises equipments via the wireless hotspot of the client device based on at least one of a traffic type or a device type. In at least some example embodiments, the computer program instructions, when executed by the apparatus, cause the apparatus at least to support a containerized application configured to control the send, switch, and connect functions at the customer premises gateway device.

In at least some example embodiments, a method includes sending, by a customer premises gateway device toward a client device in response to detection of a condition associated with a broadband connection from the customer premises gateway device to a broadband communication network, a notification of an intention of the customer premises gateway device to communicate via the client device, switching, by the customer premises gateway device, a wireless radio of the customer premises gateway device from operating in an access mode to operating in a client mode, and connecting, by the customer premises gateway device using the wireless radio of customer premises gateway device based on the client mode, to a wireless hotspot of the client device. In at least some example embodiments, the condition associated with the broadband connection from the customer premises gateway device to the broadband communication network includes an unavailability of the broadband connection from the customer premises gateway device to the broadband communication network or the broadband connection from the customer premises gateway device to the broadband communication network having a particular quality level. In at least some example embodiments, the condition associated with the broadband connection from the customer premises gateway device to the broadband communication network is based on at least one of a Layer 2 (L2) condition, a Layer 3 (L3) condition, or a Layer 4 (L4) condition. In at least some example embodiments, the broadband communication network includes at least one of a fiber optic network, a cable network, a digital subscriber line network, a fixed wireless access network, an Ethernet network, or a satellite network. In at least some example embodiments, the notification of the intention of the customer premises gateway device to communicate via the client device is sent via a wireless connection between the customer premises gateway device and the client device. In at least some example embodiments, the notification of the intention of the customer premises gateway device to communicate via the client device is sent using an application programming interface call. In at least some example embodiments, the method includes supporting, by the customer premises gateway device, communication of traffic of a set of customer premises equipments supported by the customer premises gateway device via the wireless hotspot of the client device. In at least some example embodiments, the method includes receiving, by the customer premises gateway device from the client device, an indication of an availability of the client device to provide the wireless hotspot for use by the customer premises gateway device and registering, by the customer premises gateway device, the client device as an available client device that is available to support the customer premises gateway device. In at least some example embodiments, the method includes selecting, by the customer premises gateway device from a set of available client devices including the client device, the client device to provide the wireless hotspot for use by the customer premises gateway device. In at least some example embodiments, the method includes receiving, by the customer premises gateway device from the client device, telemetry of the client device and selecting, by the customer premises gateway device based on the telemetry of the client device, the client device to provide the wireless hotspot for use by the customer premises gateway device. In at least some example embodiments, the method includes controlling, by the customer premises gateway device while the customer premises gateway device is connected to the wireless hotspot of the client device, communications of customer premises equipments via the wireless hotspot of the client device based on at least one of a traffic type or a device type. In at least some example embodiments, the method includes supporting a containerized application configured to control the send, switch, and connect functions at the customer premises gateway device.

In at least some example embodiments, an apparatus includes means for sending, by a customer premises gateway device toward a client device in response to detection of a condition associated with a broadband connection from the customer premises gateway device to a broadband communication network, a notification of an intention of the customer premises gateway device to communicate via the client device, means for switching, by the customer premises gateway device, a wireless radio of the customer premises gateway device from operating in an access mode to operating in a client mode, and means for connecting, by the customer premises gateway device using the wireless radio of customer premises gateway device based on the client mode, to a wireless hotspot of the client device. In at least some example embodiments, the condition associated with the broadband connection from the customer premises gateway device to the broadband communication network includes an unavailability of the broadband connection from the customer premises gateway device to the broadband communication network or the broadband connection from the customer premises gateway device to the broadband communication network having a particular quality level. In at least some example embodiments, the condition associated with the broadband connection from the customer premises gateway device to the broadband communication network is based on at least one of a Layer 2 (L2) condition, a Layer 3 (L3) condition, or a Layer 4 (L4) condition. In at least some example embodiments, the broadband communication network includes at least one of a fiber optic network, a cable network, a digital subscriber line network, a fixed wireless access network, an Ethernet network, or a satellite network. In at least some example embodiments, the notification of the intention of the customer premises gateway device to communicate via the client device is sent via a wireless connection between the customer premises gateway device and the client device. In at least some example embodiments, the notification of the intention of the customer premises gateway device to communicate via the client device is sent using an application programming interface call. In at least some example embodiments, the apparatus includes means for supporting, by the customer premises gateway device, communication of traffic of a set of customer premises equipments supported by the customer premises gateway device via the wireless hotspot of the client device. In at least some example embodiments, the apparatus includes means for receiving, by the customer premises gateway device from the client device, an indication of an availability of the client device to provide the wireless hotspot for use by the customer premises gateway device and means for registering, by the customer premises gateway device, the client device as an available client device that is available to support the customer premises gateway device. In at least some example embodiments, the apparatus includes means for selecting, by the customer premises gateway device from a set of available client devices including the client device, the client device to provide the wireless hotspot for use by the customer premises gateway device. In at least some example embodiments, the apparatus includes means for receiving, by the customer premises gateway device from the client device, telemetry of the client device and means for selecting, by the customer premises gateway device based on the telemetry of the client device, the client device to provide the wireless hotspot for use by the customer premises gateway device. In at least some example embodiments, the apparatus includes means for controlling, by the customer premises gateway device while the customer premises gateway device is connected to the wireless hotspot of the client device, communications of customer premises equipments via the wireless hotspot of the client device based on at least one of a traffic type or a device type. In at least some example embodiments, the apparatus includes means for supporting a containerized application configured to control the send, switch, and connect functions at the customer premises gateway device.

### BRIEF DESCRIPTION OF THE DRAWINGS

The teachings herein can be readily understood by considering the following detailed description in conjunction with the accompanying drawings, in which:
FIG. 1 depicts an example embodiment of a communication system for illustrating seamless converged broadband service;
FIG. 2 depicts an example embodiment of a method for supporting seamless converged broadband service;
FIG. 3 depicts an example embodiment of a method for use by a client device for supporting seamless converged broadband service;
FIG. 4 depicts an example embodiment of a method for use by a customer premises gateway device for supporting seamless converged broadband service; and
FIG. 5 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting seamless converged broadband service are presented herein. Various example embodiments for supporting seamless converged broadband service may be configured to use a client device at a customer location to provide network connectivity for a customer premises gateway device at the customer location. Various example embodiments for supporting seamless converged broadband service may be configured to use a wireless hotspot of a client device at a customer location to provide network connectivity for a customer premises gateway device at the customer location. Various example embodiments for supporting seamless converged broadband service may be configured to support seamless converged broadband service at a customer location based on a customer premises gateway device at the customer location that detects a condition associated with a broadband connection from the customer premises gateway device to a broadband communication network, sends to a client device at the customer location a notification of an intention of the customer premises gateway device to communicate via the client device, switches a wireless radio of the customer premises gateway device from operating in an access mode to operating in a client mode, connects to a wireless hotspot of the client device at the customer location, and communicates via the wireless hotspot of the client device to provide continuity of network connectivity for the customer premises gateway device. Various example embodiments for supporting seamless converged broadband service may be configured to support seamless converged broadband service at a customer location based on a client device at the customer location that receives a notification of an intention of the customer premises gateway device to communicate via the client device, deactivates a wireless connection from the client device to the customer premises gateway device, activates a wireless hotspot of the client device, supports connection of the customer premises gateway device to the client device via the wireless hotspot of the client device, and supports communications of the customer premises gateway device via the wireless hotspot of the client device to provide continuity of network connectivity for the customer premises gateway device. It will be appreciated that these and various other example embodiments for supporting seamless converged broadband service, and advantages or potential advantages of example embodiments for supporting seamless converged broadband service, may be further understood by way of reference to the various figures, which are discussed further below.

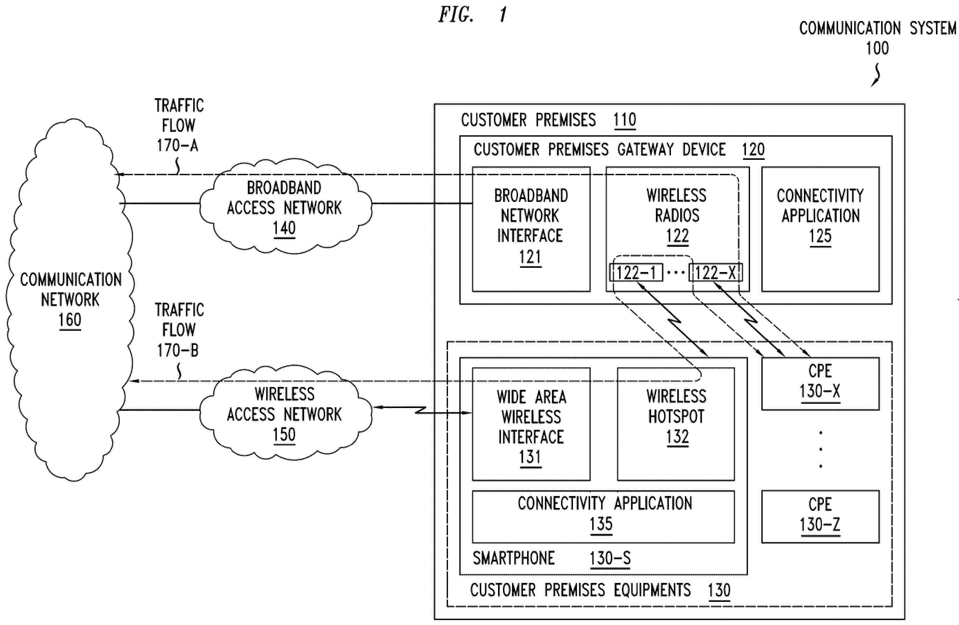

FIG. 1 depicts an example embodiment of a communication system for illustrating seamless converged broadband service.

The communication system 100 includes a customer premises 110, a customer premises gateway device 120, a set of customer premises equipments 130 (illustratively, a set of customer premises equipments denoted as 130-X to 130-Z as well as a smartphone 130-S), a broadband access network 140, a wireless access network 150, and a communication network 160. It will be appreciated that the communication system 100 may include various other elements (e.g., devices, links, or the like, as well as various combinations there).

The customer premises 110 represents a customer location of a customer. For example, the customer premises 110 of the customer may be a residential location, a business location, an enterprise location, or the like. The customer premises 110 includes the customer premises gateway device 120 and the customer premises equipments 130. It will be appreciated that the customer premises 110 may include various other devices.

The customer premises gateway device 120 is configured to support network connectivity for the customer premises equipments 130 located at the customer premises 110. The customer premises gateway device 120 includes a broadband network interface 121 configured to support a broadband network connection from the customer premises gateway device 120 to the broadband access network 140. The broadband network interface 121 may be configured to interface with various types of broadband access networks, such as an optical fiber network (e.g., fiber-to-the-x (FTTx)), a cable network (e.g., based on Data Over Cable Service Interface Specification (DOCSIS)), a Digital Subscriber Line (DSL) network, an Ethernet network, a fixed wireless access (FWA) network, a satellite network, or the like. The customer premises gateway device 120 includes a set of wireless radios 122-1 to 122-X (collectively, wireless radios 122) configured to support local wireless connections at the customer premises 110, thereby enabling the customer premises equipments 130 to wireless connect to the customer premises gateway device 120. The wireless radios 122 may be configured to support local wireless connections based on WiFi (e.g., WiFi 5, WiFi 6, or the like) or other suitable local wireless communication capabilities. It is noted that, as discussed further below, the customer premises gateway device 120 is configured to support various aspects of seamless connectivity. It will be appreciated that the customer premises gateway device 120 may include various other elements configured to support various aspects of seamless connectivity.

The customer premises equipments 130 may include various types of devices located at the customer premises 110 which may communicate via the Internet. For example, the customer premises equipments 130 may include smartphones, tablets, laptop computers, desktop computers, set top boxes, smart televisions, gaming systems, smart appliances, Internet-of-Things (IoT) devices, or the like, as well as various combinations thereof. The customer premises equipments 130 may be configured to connect to the customer premises gateway device 120 via wired connections (e.g., Ethernet connections, optical connections, or the like) and/or via wireless connections based on WiFi (e.g., WiFi 5, WiFi 6, or the like) or other suitable local wireless communication capabilities. It is noted that, as discussed further below, one of the customer premises equipments 130 located at the customer premises 110 may be a smartphone 130-S that is configured to support seamless connectivity for the customer premises gateway device 120 (although it will be appreciated that the smartphone 130-S that is used to support seamless connectivity of the customer premises gateway device 120 may not necessarily be considered one of the customer premises equipment 130 and may simply be located at the customer premises 110). It will be appreciated that the customer premises equipments 130 may include various other elements configured to communicate via the customer premises gateway device 120.

The smartphone 130-S is configured support seamless connectivity for the customer premises gateway device 120. The smartphone 130-S includes a wide area wireless interface 131 configured to support a wide area wireless connection from the smartphone 130-S to the wireless access network 150. The wide area wireless interface 131 may be configured to interface with a cellular network (e.g., a Second Generation (2G) cellular network, a Third Generation (3G) cellular network, a Fourth Generation (4G) Long Term Evolution (LTE) cellular network, a Fifth Generation (5G) cellular network, a Sixth Generation (6G) cellular network, or the like, as well as various combinations thereof) or other suitable type of wide area wireless network. The smartphone 130-S includes a wireless hotspot 132 that can be activated and deactivated at the smartphone 130-S. The wireless hotspot 132 may be configured to support local wireless connections based on WiFi (e.g., WiFi 5, WiFi 6, or the like) or other suitable local wireless communication capabilities. The wireless hotspot 132 may be activated and deactivated automatically at the smartphone 130-S based on use of one or more wireless hotspot control application programming interfaces (APIs) configured to automatically activate or deactivate the wireless hotspot 132 (e.g., one or more OS-level wireless hotspot activation/deactivation APIs, one or more firmware-level wireless hotspot activation/deactivation APIs, or the like, as well as various combinations thereof). It is noted that, as discussed further below, the smartphone 130-S is configured to support various aspects of seamless connectivity. It will be appreciated that the smartphone 130-S may include various other elements configured to support various aspects of seamless connectivity.

The broadband access network 140 is configured to support broadband access to the communication network 160. The broadband access network 140 is configured to provide broadband network connectivity for the customer premises gateway device 120, thereby enabling the customer premises gateway device 120 to support communications between the customer premises equipments 130 and the communication network 160. The broadband access network 140 may be implemented using various types of broadband communication technologies, and may be a wireline communication network or a wireless communication network. For example, as indicated above, the broadband access network 140 may be an optical fiber network (e.g., FTTx), a cable network (e.g., based on DOCSIS), an FWA network, a DSL network, an Ethernet network, a satellite network, or the like, as well as various combinations thereof. It will be appreciated that, although omitted for purposes of clarity, the broadband access network 140 may include various elements configured to support communications of the customer premises gateway device 120 (e.g., gateways, switches, routers, or the like, as well as various combinations thereof). It will be appreciated that the broadband access network 140 may be implemented using various other types of broadband communication technologies.

The wireless access network 150 is configured to support wireless access to the communication network 160. The wireless access network 120 is configured to provide wide area wireless network connectivity for the smartphone 130-S (as well as other customer premises equipments 130 which may support wide area wireless network connectivity capabilities). The wireless access network 150 may be implemented using various types of wide area wireless network technologies (and, thus, also may be referred to as a wide area wireless access network). For example, the wireless access network 150 may be a 2G cellular network, a 3G cellular network, a 4G LTE cellular network, a 5G cellular network, a 6G cellular network, or the like, as well as various combinations thereof. It will be appreciated that, although omitted for purposes of clarity, the wireless access network 150 may include various elements configured to support communications of the smartphone 130-S (e.g., base stations (BSs), gateways, switches, routers, or the like, as well as various combinations thereof). It will be appreciated that the wireless access network 150 may be implemented using various other types of wireless access technologies.

The communication system 100 is configured to support a seamless converged broadband service whereby access by the customer premises equipments 130 to the communication network 160 (e.g., Internet connectivity) is made more resilient based on seamless switching between communication of the customer premises gateway device 120 via the broadband access network 140 and communication of the customer premises gateway device 120 via the smartphone 130-S and the wireless access network 150. In this manner, the customer premises gateway device 120 is provided seamless and converged access to the communication network 160, thereby providing seamless and converged access by the customer premises equipments 130 to the communication network 160. The customer premises gateway device 120 and the smartphone 130-S may be configured to cooperate to support the seamless converged broadband service for the customer premises equipments 130. As discussed further below, based on a condition associated with connectivity by the customer premises gateway device 120 via the broadband access network 140 (e.g., unavailability of a broadband connection from the customer premises gateway device 120 to the broadband access network 140, a broadband connection from the customer premises gateway device 120 via the broadband access network 140 failing to satisfy a particular quality level, or the like), the smartphone 130-S activates the wireless hotspot 132 of the smartphone 130-S and the customer premises gateway device 120 connects to the wireless hotspot 132 of the smartphone 130-S in order to communicate via the wireless access network 150 and, thus, in order to continue to support communications of the customer premises equipments 130 via the smartphone 130-S and the wireless access network 150. It is noted that the operation of the customer premises gateway device 120 and the smartphone 130-S in supporting the seamless converged broadband service is discussed further below.

The customer premises gateway device 120 and the smartphone 130-S are configured to support registration of the smartphone 130-S with the customer premises gateway device 120, whereby the smartphone 130-S is registered at the customer premises gateway device 120 as a client device that is available and willing to provide a wireless hotspot for the customer premises gateway device 120 in the event that the customer premises gateway device 120 determines that a wireless hotspot of the smartphone 130-S is necessary or desirable for connectivity to the communication network 160 (e.g., customer premises gateway device 120 does not have connectivity to the broadband access network 140, customer premises gateway device 120 has connectivity to the broadband access network 140 but the quality of the connectivity to the broadband access network 140 fails to satisfy a particular quality level, or the like). The registration of smartphone 130-S with the customer premises gateway device 120 may be initiated by the smartphone 130-S (e.g., by sending a message to the customer premises gateway device 120 after connecting to the customer premises gateway device 120) or may be initiated by the customer premises gateway device 120 (e.g., by sending a message to the smartphone 130-S after the smartphone 130-S connects to the customer premises gateway device 120). The registration of smartphone 130-S with the customer premises gateway device 120 may be performed automatically in a manner that is transparent to the user of the smartphone 130-S (e.g., where the user previously configured a setting to permit such registration) or semi-automatically in a manner that enables the user of the smartphone 130-S to control whether or not the smartphone 130-S registered at the customer premises gateway device (e.g., based on one or more messages displayed via a display of the smartphone 130-S so that the user can allow or prevent registration of smartphone 130-S with the customer premises gateway device 120).

The customer premises gateway device 120 may be configured to support monitoring of connectivity of the customer premises gateway device 120 to the broadband access network 140 for determining when to initiate switching from use of the broadband access network 140 to use of the wireless access network 150 and for determining when to initiate switchback from use of the wireless access network 150 to use of the broadband access network 140. The customer premises gateway device 120 may support monitoring of connectivity of the customer premises gateway device 120 to the broadband access network 140 based on communication to a device or service hosted within the broadband access network 140 (e.g., a device or service with a known address, such as an IPv4 address or IPv6 address, with which the customer premises gateway device 120 can communicate for monitoring connectivity from the customer premises gateway device 120 to the broadband access network 140 (e.g., based on use of periodic heartbeat messages or other suitable types of communications). The customer premises gateway device 120 may detect a condition associated with connectivity of the customer premises gateway device 120 to the broadband access network 140 at one or more of a physical layer, a network layer, an application layer (e.g., a Domain Name Service (DNS) condition, a Dynamic Host Configuration Protocol (DHCP) condition, or the like), or the like, as well as various combinations thereof. The customer premises gateway device 120 may detect a condition associated with connectivity of the customer premises gateway device 120 to the broadband access network 140 at one or more of Layer 2 (L2), Layer 3 (L3), Layer 4 (L4), or the like, as well as various combinations thereof. The customer premises gateway device 120 may detect conditions such as WAN flapping (rapid phases of instability), WAN flapping mitigation, or the like, as well as various combinations thereof. The customer premises gateway device 120 may be configured to employ various heuristics to validate various conditions detected for connectivity of the customer premises gateway device 120 to the broadband access network 140.

The customer premises gateway device 120 and the smartphone 130-S may be configured to support seamless switching from use of the broadband access network 140 to use of the wireless access network 150 when there is a condition associated with the connectivity of the customer premises gateway device 120 via the broadband access network 140 (e.g., connectivity is unavailable, connectivity fails to satisfy one or more quality thresholds, or the like). The customer premises gateway device 120 monitors connectivity of the customer premises gateway device 120 to the broadband access network 140. The customer premises gateway device 120, based on a determination that there is a condition associated with connectivity by the customer premises gateway device 120 to the broadband access network 140, (1) notifies the smartphone 130-S so that the smartphone 130-S can perform actions that will enable the smartphone 130-S to support communications of the customer premises gateway device 120 and (2) performs actions locally so that the customer premises gateway device 120 can communicate through the smartphone 130-S. The notification from the customer premises gateway device 120 to the smartphone 130-S may include an indication of an intention of the customer premises gateway device 120 to communicate via the smartphone 130-S (e.g., to use to the smartphone 130-S for wide area communication), a request by the customer premises gateway device 120 to communicate via the smartphone 130-S (e.g., to use to the smartphone 130-S for wide area communication), an indication of the detection of the condition associated with connectivity by the customer premises gateway device 120 to the broadband access network 140, or the like, as well as various combinations thereof. The smartphone 130-S, upon receiving the notification from the customer premises gateway device 120, deactivates a wireless connection from the smartphone 130-S to the customer premises gateway device 120 and activates the wireless hotspot 132 of the smartphone 130-S so that the customer premises gateway device 120 can connect through the wireless hotspot 132 of the smartphone 130-S. The customer premises gateway device 120 switches one of the wireless radios 122 of the customer premises gateway device 120 (illustratively, the wireless radio 122-1) from operating in an access mode (whereby the customer premises gateway device 120 is operating as an access point with respect to the wireless radio 122-1 to enable customer premises equipments 130 to connect to the customer premises gateway device 120 via the wireless radio 122-1, which is not illustrated in FIG. 1) to operating in a client mode (whereby the customer premises gateway device 120 is operating as a client of the smartphone 130-S via the wireless radio 122-1, which is illustrated in FIG. 1) and connects to the wireless hotspot 132 of the smartphone 130-S. The communication between the customer premises gateway device 120 and the smartphone 130-S for supporting seamless switching from use of the broadband access network 140 to use of the wireless access network 150 may be based on a wireless connection between the customer premises gateway device 120 and the smartphone 130-S (e.g., where the smartphone 130-S had a WiFi connection to the customer premises gateway device 120), use of one or more APIs (e.g., one or more RESTful APIs or other suitable APIs), or the like, as well as various combinations thereof. The customer premises gateway device 120, once connected to the wireless hotspot of the smartphone 130-S, supports communications of the customer premises equipments 130 via the smartphone 130-S and the wireless access network 150.

The customer premises gateway device 120 and the smartphone 130-S may be configured to support seamless switchback from use of the wireless access network 150 to use of the broadband access network 140 when connectivity via the broadband access network 140 becomes available again. The customer premises gateway device 120 monitors availability of the broadband access network 140 for the customer premises gateway device 120. The customer premises gateway device 120, based on a determination that the condition associated with connectivity by the customer premises gateway device 120 to the broadband access network 140 has cleared, (1) performs actions locally so that the customer premises gateway device 120 can communicate through the broadband access network 140 and (2) notifies the smartphone 130-S so that the smartphone 130-S can perform actions to enable the smartphone 130-S to stop supporting communications of the customer premises gateway device 120. The notification from the customer premises gateway device 120 to the smartphone 130-S may include an indication of an intention of the customer premises gateway device 120 to stop communicating via the smartphone 130-S (e.g., to stop using the smartphone 130-S for wide area communication), a request by the customer premises gateway device 120 to stop communicating via the smartphone 130-S (e.g., to stop using the smartphone 130-S for wide area communication), an indication of the detection of the condition associated with connectivity by the customer premises gateway device 120 to the broadband access network 140, or the like, as well as various combinations thereof. The customer premises gateway device 120 switches the one of the wireless radios 122 of the customer premises gateway device 120 (again, the wireless radio 122-1) from operating in the client mode (whereby the customer premises gateway device 120 is operating as a client of the smartphone 130-S via the wireless radio 122-1, which is illustrated in FIG. 1) to operating in the access mode (whereby the customer premises gateway device 120 is operating as an access point with respect to the wireless radio 122-1 to enable customer premises equipments 130 to connect to the customer premises gateway device 120 via the wireless radio 122-1, which is not illustrated in FIG. 1) and connects to the broadband access network 140. The smartphone 130-S, upon receiving the notification from the customer premises gateway device 120, deactivates the wireless hotspot 132 of the smartphone 130-S (since the customer premises gateway device 120 no longer needs to connect through the wireless hotspot 132 of the smartphone 130-S) and activates a wireless connection from the smartphone 130-S to the customer premises gateway device 120 or a wireless connection from the smartphone 130-S to the wireless access network 150. The communication between the customer premises gateway device 120 and the smartphone 130-S for supporting seamless switchback from use of the wireless access network 150 to use of the broadband access network 140 may be based on a wireless connection between the customer premises gateway device 120 and the smartphone 130-S, use of one or more APIs (e.g., one or more RESTful APIs or other suitable types of APIs), or the like, as well as various combinations thereof. The customer premises gateway device 120, once reconnected to the broadband access network 140, supports communications of the customer premises equipments 130 via the broadband access network 140.

The cooperation of the customer premises gateway device 120 and the smartphone 130-S to support seamless switching between use of the broadband access network 140 and use of the wireless access network 150 based on availability of connectivity of the customer premises gateway device 120 via the broadband access network 140 may be further understood by considering the flow of traffic for one of the customer premises equipments 130 (illustratively, for the customer premises equipment 130-X). As illustrated in FIG. 1, while the customer premises gateway device 120 is able to connect via the broadband access network 140, a traffic flow 170-A is established between the customer premises equipment 130-X and the communication network 160 via a path that includes the customer premises gateway device 120 (illustratively, via the wireless radio 122-X and the broadband network interface 121 to the broadband access network 140) and the broadband access network 140. As illustrated in FIG. 1, while the customer premises gateway device 120 is able to connect via the broadband access network 140, a traffic flow 170-A is established between the customer premises equipment 130-X and the communication network 160 via a path that includes the customer premises gateway device 120 (illustratively, via the wireless radio 122-X and the broadband network interface 121 to the broadband access network 140) and the broadband access network 140. It will be appreciated that seamless switching between such paths provides a high level of resiliency for communications of the customer premises equipments 130 at the customer premises 110. As illustrated in FIG. 1, while the customer premises gateway device 120 is unable to connect via the broadband access network 140, a traffic flow 170-B is established between the customer premises equipment 130-X and the communication network 160 via a path that includes the customer premises gateway device 120 (illustratively, via the wireless radio 122-X operating in an access mode and the wireless radio 122-1 operating in a client mode), the smartphone 130-S (illustratively, via the wireless hotspot 132 and the wire area wireless interface 131 to the wireless access network 150), and the wireless access network 150. It will be appreciated that seamless switching between such paths provides a high level of resiliency for communications of the customer premises equipments 130 at the customer premises 110.

The customer premises gateway device 120 and the smartphone 130-S may be configured to support seamless switching between use of the broadband access network 140 and use of the wireless access network 150 to support broadband access from the customer premises 110 based on use of a process that relies on a set of states to support switching between use of the broadband access network 140 and use of the wireless access network 150. The first state is a DETECT state, in which the customer premises gateway device 120 monitors for presence or absence of a condition associated with connectivity of the customer premises gateway device to the broadband access network 140 via the broadband network interface 121. The customer premises gateway device 120 may monitor for presence or absence of a condition associated with connectivity of the customer premises gateway device 120 to the broadband access network 140 using various types of monitoring (e.g., monitoring for an Ethernet physical state change associated with the connection to the broadband access network 140, monitoring the connection to the broadband access network 140 based on periodic pings to the broadband access network 140, or the like, as well as various combinations thereof). The second state is a HYSTERESIS state, which is used to ensure that the state of the broadband connection of the customer premises gateway device 120 that is detected in the DETECT state (i.e., the broadband connection is active and stable or the broadband connection is in active or unstable) has been in that detected state for a threshold length of time, so as to prevent flapping between use of the broadband access network 140 and the wireless access network 150. On expiration of the HYSTERESIS state, based on a determination that the DETECT state is maintained (i.e., it has not changed during the HYSTERESIS state), then the switch between use of the broadband access network 140 and use of the wireless access network 150 is initiated (namely, switching from use of the broadband access network 140 to use of the wireless access network 150 when the DETECT state detects that the connection via the broadband access network 140 is unavailable/unsuitable or switching from use of the wireless access network 150 to use of the broadband access network 140 when the DETECT state detects that the connection via the broadband access network 140 is available/suitable). The third state is a COOL OFF state, entered from the HYSTERESIS state, in which the customer premises gateway device waits a configured length of time before returning to the DETECT state to determine whether the state of the connection to the broadband access network 140 has changed. It will be appreciated that, to support seamless switching between use of the broadband access network 140 and use of the wireless access network 150, these states may be implemented in other ways, fewer or more states may be defined and used, or the like.

The customer premises gateway device 120 and the smartphone 130-S may be configured to support intelligent selection of the smartphone 130-S, by the customer premises gateway device from a set of multiple available client devices available to provide the seamless converged broadband service for the customer premises gateway device 120, to provide the seamless converged broadband service for the customer premises gateway device 120. The smartphone 130-S (as well as other available client devices which register with the customer premises gateway device) may be configured to provide telemetry to the customer premises gateway device 120 (e.g., as part of registration with the customer premises gateway device, periodically while registered with the customer premises gateway device 120, or the like) and the customer premises gateway device 120 may use the telemetry to determine whether to select the smartphone 130-S or a different client device to provide the seamless converged broadband service for the customer premises gateway device 120 when there is a condition associated with the broadband connection from the customer premises gateway device 120 to the broadband access network 140. The telemetry may include various types of information which may be available from the available client devices (such as smartphone 130-S) and useful to the customer premises gateway device 120 in selecting one of the available client devices to provide the seamless converged broadband service (e.g., battery power levels of the available client devices, local wireless signal strength information (e.g., WiFi received signal strength indicator (RSSI) information) of the available client devices, wide area wireless signal strength information (e.g. cellular signal strength information such as 4G/5G signal strengths) of the available client devices, or the like, as well as various combinations thereof). The customer premises gateway device 120 may be configured to support heuristics for analyzing the telemetry of the smartphone 130-S and other client devices to determine the best candidate client device that would be the best backhaul provider for the customer premises gateway device 120 when there is a condition associated with the broadband connection from the customer premises gateway device 120 to the broadband access network 140.

The customer premises gateway device 120 and the smartphone 130-S may be configured to provide various functions for supporting improved communications via the smartphone 130-S when the seamless converged broadband service is active. The customer premises gateway device 120 may be configured to support or apply traffic mitigation techniques to control various aspects of communications via the smartphone 130-S, thereby enabling the customer premises gateway device 120 to protect the wireless access network 150 from being over-driven in times of significant outages. For example, the customer premises gateway device 120 may be configured to support or apply traffic mitigation techniques to control various aspects of communications via the smartphone 130-S, such as by limiting traffic types in terms of traffic types that are allowed and/or not allowed (e.g., video, web, or the like), limiting device types in terms of device types that are allowed and/or not allowed (e.g., smartphones, laptops, Smart TVs, IoT, or the like), or the like, as well as various combinations thereof. The smartphone 130-S may be configured by the operator to protect the wireless access network 150 from a dramatic influx of traffic. For example, the smartphone 130-S may be configured by the operator to select a different APN or 5G slice with a more conservative quality-of-service class identifier (QCI) or other traffic engineering setting(s). It will be appreciated that the customer premises gateway device 120 and/or the smartphone 130-S may be configured to provide various other functions for supporting improved communications via the smartphone 130-S when the seamless converged broadband service is active.

The customer premises gateway device 120 and the smartphone 130-S may be configured to support seamless switching between use of the broadband access network 140 and use of the wireless access network 150 using connectivity applications supported by the customer premises gateway device 120 and the smartphone 130-S (illustratively, connectivity application 125 of the customer premises gateway device 120 and connectivity application 135 of the smartphone 130-S). The connectivity application 125 of the customer premises gateway device 120 may be configured to control various functions presented herein as being performed by the customer premises gateway device 120 for switching between connectivity via the broadband access network 140 and connectivity via the wireless hotspot of the smartphone 130-S (e.g., supporting registration of the smartphone 130-S, monitoring the primary WAN connection to the broadband access network 140, supporting selection of the smartphone 130-S as the backup client device, notifying the smartphone 130-S when the seamless switching is needed, converting a WiFi radio used in access point mode to operate in client mode and using the WiFi radio to connect to the smartphone 130-S, rerouting broadband Internet traffic via the smartphone 130-S, and so forth). The connectivity application 135 of the smartphone 130-S may be configured to control various functions presented herein as being performed by the smartphone 130-S for supporting switching of the customer premises gateway device 120 between connectivity via the broadband access network 140 and connectivity via the wireless hotspot of the smartphone 130-S (e.g., supporting registration of the smartphone 130-S with the customer premises gateway device 120, programmatically turning off the WiFi connection of the smartphone 130-S, launching a WiFi hotspot on the smartphone 130-S, supporting communication of broadband Internet traffic via the smartphone 130-S shutting down the WiFi hotspot, restoring a WiFi connection to the customer premises gateway device 120, and so forth). The connectivity application 125 of the customer premises gateway device 120 and the connectivity application 135-S of the smartphone 130-S may interact in various ways to support various functions presented herein for supporting seamless switching between use of the broadband access network 140 and use of the wireless access network 150 based on availability of connectivity of the customer premises gateway device 120 via the broadband access network 140. It will be appreciated that the connectivity application 125 of the customer premises gateway device 120 and the connectivity application 135-S of the smartphone 130-S may be implemented in various ways (e.g., as non-containerized applications running on firmware, as containerized applications, or the like, as well as various combinations thereof).

The connectivity applications supported by the customer premises gateway device 120 (illustratively, the connectivity application 125, which may be a containerized application) and the smartphone 130-S (illustratively, the connectivity application 135-S, which may be a system application) may cooperate in various ways to provide a seamless experience in the case of conditions associated with the primary broadband facilities to the broadband access network 140. The connectivity application 125 and the connectivity application 135-S may work together to configure and provide a dedicated WiFi hotspot mobile device backhaul redundancy to the residential gateway CPE should the primary broadband access (e.g., FTTH, DOCSIS, DSL, Ethernet, etc.) experience an outage (e.g., L2, L3, L4, or the like). The connectivity application 135-S, when the smartphone 130-S is connected to the local WiFi network of the customer premises gateway device 120, may reach out to its default IP gateway (provided in the customer premises gateway device 120) via a RESTful API call. The connectivity application 135-S, based on a determination that the customer premises gateway device 120 supports the seamless converged broadband service, authenticates and registers with the customer premises gateway device 120 and informs the customer premises gateway device 120 that the smartphone 130-S is available as a fallback broadband service device should it be needed. As long as the connectivity application 135-S is installed on the smartphone 130-S, this process can be automated and seamless (e.g., without any interaction from the end user) or near-seamless (e.g., via use of notifications and prompts with which the end user can interact). The smartphone 130-S may then "check-in" with the customer premises gateway device 120 (e.g., on a configurable time schedule) to let the customer premises gateway device 120 know of its continued availability and to provide telemetry (e.g., battery power level, local wireless signal strength information (e.g., WiFi RSSI information), wide area wireless signal strength information (e.g. cellular signal strength information such as 4G/5G signal strength), or the like) for use by the customer premises gateway device 120 in determining whether to select the smartphone 130-S to provide the seamless converged broadband service when there is a condition associated with broadband connectivity at the customer premises gateway device 120. The connectivity application 125 monitors the primary WAN connection of the broadband service and, based on a determination that the Internet connection becomes disrupted or unstable (e.g., at Layer 2, Layer 3, and/or Layer 4), the connectivity application 125 will reach out to one of its registered candidate devices (e.g., to the smartphone 130-S) via an API call (e.g., a RESTful API call) to notify the device that its services are required. The connectivity application 135 will then programmatically turn off the WiFi connection of the smartphone 130-S to the customer premises gateway device 120 and launch the wireless hotspot 132 so that the customer premises gateway device 120 can connect to the wireless hotspot 132 and continue to provide broadband Internet connectivity for the other customer premises equipments 130 at the customer premises 110. The connectivity application 125 will convert one of its WiFi radios that was configured in access point mode to client mode, and use that converted WiFi radio to connect to the wireless hotspot 132 on the smartphone 130-S and re-route the broadband Internet traffic via the newly configured WIFI WAN interface and the smartphone 130-S. When the primary WAN connection for the customer premises gateway device 120 becomes available (or stable) again, the reverse process may be performed by the connectivity applications, e.g., the customer premises gateway device 120 drops the connection to the wireless hotspot 132 of the smartphone 130-S, the smartphone 130-S shuts down the wireless hotspot 132 since there is no longer a connection from the customer premises gateway device 120 (e.g.. if there is no connection for a threshold length of time, such as 30 seconds, 60 seconds, or the like), the customer premises gateway device 120 converts the WiFi radio from client mode back to access mode, the smartphone 130-S reactivates WiFi and restores the WiFi connection to the customer premises gateway device 120, and the customer premises gateway device 120 routes the broadband Internet traffic via the broadband access network 140.

It will be appreciated that the communication system 100 may be configured to support a seamless converged broadband service, whereby access by the customer premises equipments 130 to the communication network 160 is made more resilient based on seamless switching between communication via the broadband access network 140 and communication via the wireless access network 150 using a wireless hotspot of the smartphone 130-S, based on various other capabilities (e.g., various other capabilities supported by the customer premises gateway device 120, various other capabilities supported by the smartphone 130-S, or the like, as well as various combinations thereof.

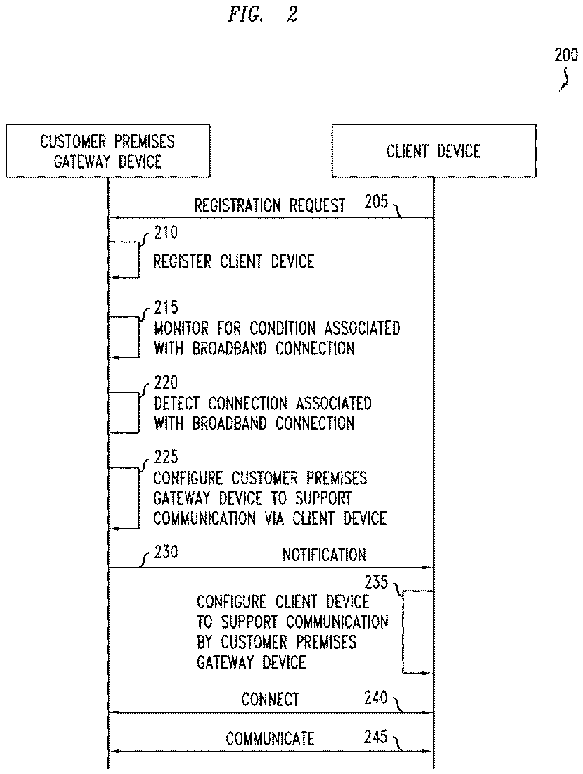

FIG. 2 depicts an example embodiment of a method for supporting seamless converged broadband service. It will be appreciated that some of the steps of method 200 are performed by a customer premises gateway device (e.g., customer premises gateway device 120 of FIG. 1) and some of the steps of method 200 are performed by a client device (e.g., smartphone 130-S of FIG. 1). It will be appreciated that, although primarily presented herein as being performed in a particular order, at least a portion of the functions of method 200 may be performed differently than as presented in FIG. 2 (e.g., serially, contemporaneously, dependently, independently, or the like, as well as various combinations thereof).

At step 205, the client device provides a registration request to the customer premises gateway device, indicating an availability and willingness of the client device to support the seamless converged bandwidth service. It will be appreciated that, although primarily presented with respect to initiation of the registration process by the client device, registration of the client device also may be initiated by the customer premises gateway device. At step 210, the customer premises gateway device registers the client device as being available to support the seamless converged bandwidth service. It will be appreciated that the client device may be one of multiple client devices registered by the customer premises gateway device, such that multiple client devices may be available for use by the customer premises gateway device for service continuity when broadband connectivity is not available for the customer premises gateway device.

At step 215, the customer premises gateway device monitors for a condition associated with a broadband connection from the customer premises gateway device to a broadband communication network. The condition associated with the broadband connection from the customer premises gateway device to the broadband communication network may be an unavailability of the broadband connection from the customer premises gateway device to the broadband communication network, the broadband connection from the customer premises gateway device to the broadband communication network having a particular quality level (e.g., below a quality threshold), or the like. It will be appreciated that the method 200 may remain at step 215 until a condition associated with a broadband connection from the customer premises gateway device to a broadband communication network is detected, at which point the method 200 may proceed. At step 220, the customer premises gateway device detects a condition associated with a broadband connection from the customer premises gateway device to a broadband communication network.

At step 225, the customer premises gateway device performs configuration of the customer premises gateway device to support communication of the customer premises gateway device via the client device. For example, the customer premises gateway device switches a wireless radio of the customer premises gateway device from operating in an access mode (for support access by customer premises equipments to the customer premises gateway device) to operating in a client mode (for supporting connectivity of the customer premises gateway device to a wireless hotspot of the client device). It will be appreciated that the customer premises gateway device may perform other actions for configuring the customer premises gateway device to support communication of the customer premises gateway device via the client device.

At step 230, the customer premises gateway device provides, to the client device, a notification of an intention of the customer premises gateway device to perform wide area communications via the client device while there is a condition associated with the broadband connection from the customer premises gateway device to the broadband communication network. The notification from the customer premises gateway device to the client device may include an indication of an intention of the customer premises gateway device to communicate via the client device, a request by the customer premises gateway device to communicate via the client device, an indication of the detection of the condition associated with the broadband connection from the customer premises gateway device to the broadband communication network, or the like, as well as various combinations thereof.

At step 235, the client device performs configuration of the client device to support communication of the customer premises gateway device via the client device. For example, the client device deactivates a wireless connection from the client device to the customer premises gateway device and activates a wireless hotspot of the client device. It will be appreciated that the client device may perform other actions for configuring the client device to support communication of the customer premises gateway device via the client device.

At step 240, the customer premises gateway device connects to the wireless hotspot of the client device. It will be appreciated that, as illustrated in FIG. 2, this may be based on interaction between the customer premises gateway device and the client device (e.g., including exchanging of messages between the customer premises gateway device and the client device).

At step 245, the customer premises gateway device and the client device support communication of the customer premises gateway device (and, thus, any customer premises equipments supported by the customer premises gateway device) via the wireless hotspot of the client device.

It will be appreciated that the method 200 may include fewer or more (as well as different) steps which may be performed by the customer premises gateway device and/or the client device in order to support the seamless converged broadband service.

It will be appreciated that various other functions presented herein within the context of the communication system 100 of FIG. 1 also may be provided within the context of the method 200 of FIG. 2.

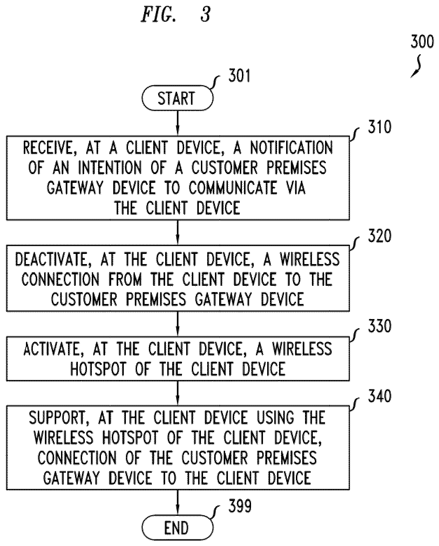

FIG. 3 depicts an example embodiment of a method for use by a client device for supporting seamless converged broadband service. It will be appreciated that, although primarily presented herein as being performed serially, at least a portion of the functions of method 300 may be performed contemporaneously or in a different order than as presented in FIG. 3. At block 301, the method 300 begins. At block 310, receive, at a client device, a notification of an intention of a customer premises gateway device to communicate via the client device. At block 320, deactivate, at the client device, a wireless connection from the client device to the customer premises gateway device. At block 330, activate, at the client device, a wireless hotspot of the client device. At block 340, support, at the client device using the wireless hotspot of the client device, connection of the customer premises gateway device to the client device. At block 399, the method 300 ends. It will be appreciated that fewer or more functions may be performed within the context of the method 300, functions of the method 300 may be combined in various ways and/or separated into separate functions in various ways, or the like, as well as various combinations thereof. It will be appreciated that various other functions presented herein within the context of the communication system 100 of FIG. 1 and the method 200 of FIG. 2 also may be provided within the context of the method 300 of FIG. 3.

It will be appreciated that the client device may perform various other combinations of functions to support the seamless converged broadband service. In at least some example embodiments, for example, the client device may be configured to receive a notification from a customer premises gateway device, activate a wireless hotspot of the client device based on the notification from the customer premises gateway device, and support connection of the customer premises gateway device to the wireless hotspot of the client device. In at least some example embodiments, for example, the client device may be configured to activate a wireless hotspot of the client device for a customer premises gateway device and support connection of the customer premises gateway device to the wireless hotspot of the client device. It will be appreciated that the client device may perform various other functions or combinations of functions to support the seamless converged broadband service.

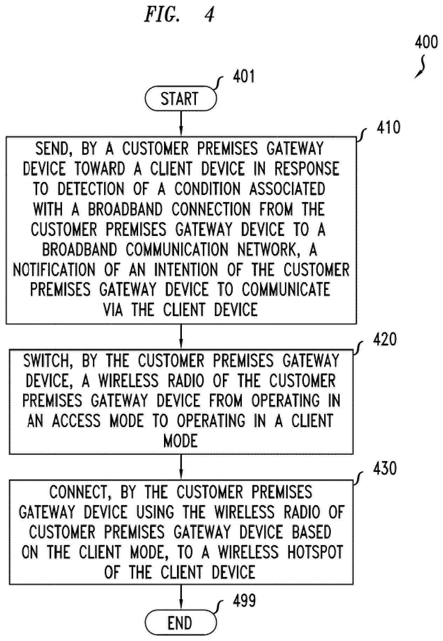

FIG. 4 depicts an example embodiment of a method for use by a customer premises gateway device for supporting seamless converged broadband service. It will be appreciated that, although primarily presented herein as being performed serially, at least a portion of the functions of method 400 may be performed contemporaneously or in a different order than as presented in FIG. 4. At block 401, the method 400 begins. At block 410, send, by a customer premises gateway device toward a client device in response to detection of a condition associated with a broadband connection from the customer premises gateway device to a broadband communication network, a notification of an intention of the customer premises gateway device to communicate via the client device. At block 420, switch, by the customer premises gateway device, a wireless radio of the customer premises gateway device from operating in an access mode to operating in a client mode. At block 430, connect, by the customer premises gateway device using the wireless radio of customer premises gateway device based on the client mode, to a wireless hotspot of the client device. At block 499, the method 400 ends. It will be appreciated that fewer or more functions may be performed within the context of the method 400, functions of the method 400 may be combined in various ways and/or separated into separate functions in various ways, or the like, as well as various combinations thereof. It will be appreciated that various other functions presented herein within the context of the communication system 100 of FIG. 1 and the method 200 of FIG. 2 also may be provided within the context of the method 400 of FIG. 4.

It will be appreciated that the customer premises gateway device may perform various other combinations of functions to support the seamless converged broadband service. In at least some example embodiments, for example, the customer premises gateway device may be configured to send a notification toward a client device and connect to a wireless hotspot of the client device via a wireless radio of the customer premises gateway device that is operating in a client mode (e.g., a wireless radio previously operating in an access mode that is switched to the client mode, or a wireless radio that is already operating in the client mode such as where one wireless radio of the customer premises gateway device is dedicated to operating in the client mode in order to be ready to support seamless switchover of the customer premises gateway device from communicating via a broadband access interface to communicating via the wireless hotspot of the client device). In at least some example embodiments, for example, the customer premises gateway device may be configured to send a notification toward a client device and connect to a wireless hotspot of the client device. It will be appreciated that the customer premises gateway device may perform various other functions or combinations of functions to support the seamless converged broadband service.

It will be appreciated that, although primarily presented herein with respect to use of a particular type of device at the customer location (a particular type of client device, namely, a smartphone) to provide the wireless hotspot for supporting seamless converged broadband service, various other types of devices which may be available at customer locations and that may support wireless hotspots may be used for supporting seamless converged broadband service (e.g., tablets, laptop computers, desktop computers, or the like).

It will be appreciated that the device used to provide the wireless hotspot for supporting seamless converged broadband service, additionally or alternatively to being referred to as a client device, also or alternatively may be referred to as a customer premises equipment or device (e.g., a device available at the customer premises), a wireless customer device, a customer device, or, more generally, a device (e.g., any suitable device configured to perform the functions presented herein as being performed by the smartphone to support the seamless converged broadband service).

Various example embodiments for supporting seamless converged broadband service may provide various advantages or potential advantages.

For example, various example embodiments for supporting seamless converged broadband service may be configured to provide survivability for Internet broadband access while drastically simplifying the deployment, configuration, and operations for providing survivability for Internet broadband and, thus, significantly reducing the costs associated with providing survivability for Internet broadband.

For example, various example embodiments for supporting seamless converged broadband service may be configured to provide survivability for Internet broadband access in a manner that provides a fully automated and unbreakable broadband experience for the customer (e.g., the end user does not need to (but can) preconfigure any access credentials and does not need to manually activate or deactivate the service, and the service provider does not need to deploy any network equipment for functions in either the wireline network or wireless network in order to manage and support the service).

For example, various example embodiments for supporting seamless converged broadband service may be configured to provide a level of survivability not generally supported by existing Internet broadband access technologies (e.g., FTTx, DOCSIS, DSL, FWA, satellite, etc.) which typically are more focused on providing built-in capabilities for throughput, latency, security, and reliability without supporting survivability in case of outages.

For example, various example embodiments for supporting seamless converged broadband service may be configured to provide survivability for Internet broadband access without requiring use of multi-WAN access solutions such as combining multiple WAN access technologies into a CPE device (e.g., without having to add costly 4G/5G transceiver technology to the CPE device) or supporting concurrent multi-WAN access (e.g., Multipath Transmission Control Protocol (MPTCP)).

For example, various example embodiments for supporting seamless converged broadband service may be configured to provide survivability for Internet broadband access without requiring integration of Hybrid Access Gateway (HAG) technology in carrier networks (e.g., without requiring use of a HAG to help perform the coordination and testing of the multi-WAN links and failure detection), which typically is complicated and costly.

For example, various example embodiments for supporting seamless converged broadband service may be configured to provide survivability for Internet broadband access without requiring manual operations for configuration and/or operations for providing survivability for Internet broadband access (e.g., obviating the need for the customer to perform manual configurations ahead of or at the time of broadband Internet access outages, obviating the need for the customer to manually reconfigure all of the WiFi configurations at the customer premises to support the new WAN option, and so forth).

For example, various example embodiments for supporting seamless converged broadband service may be configured to provide survivability for Internet broadband access without the service provider losing "visibility" and service assurance capabilities as typically happens when a non-managed or converged multi-WAN is used by the end user.

For example, various example embodiments for supporting seamless converged broadband service may be configured to provide survivability for Internet broadband access without having to rely on non-carrier-grade or unpredictable alternate WAN options (e.g., WiFi to unmanaged third party access points).

For example, various example embodiments for supporting seamless converged broadband service may be configured to provide survivability for Internet broadband access while creating a "stickiness" factor between the wireline and wireless offerings from the service provider (e.g., traditionally consumers will switch mobile providers at a much higher rate (higher churn) due to the simplicity (enabled via SIM swap and local number portability), so having a fully integrated unbreakable broadband solution that would tie-in and engage both wireline and wireless services will have a positive impact on the wireless churn by reducing the willingness to lose such a favorable automated backup solution).

Various example embodiments for supporting seamless converged broadband service may provide various other advantages or potential advantages.

It will be appreciated that, although primarily referred to herein as a seamless converged broadband service, various example embodiments presented herein also or alternatively may be referred to herein as a seamless converged connectivity service (e.g., a service that is configured to provide converged network connectivity based on a combination of broadband access and wireless access using a hotspot of a client device) or a seamless converged Internet access service (e.g., a service that is configured to provide converged Internet access based on a combination of broadband access and wireless access using a hotspot of a client device).

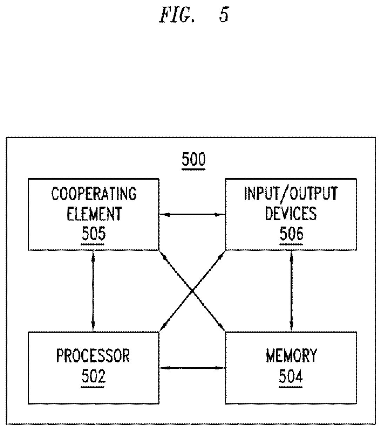

FIG. 5 depicts an example embodiment of a computer suitable for use in performing various functions presented herein.

The computer 500 includes a processor 502 (e.g., a central processing unit (CPU), a processor, a processor having a set of processor cores, a processor core of a processor, or the like) and a memory 504 (e.g., a random access memory (RAM), a read-only memory (ROM), or the like). In at least some example embodiments, the computer 500 may include at least one processor and at least one memory storing instructions that, when executed by the at least one processor, cause the computer to perform various functions presented herein.

The computer 500 also may include a cooperating element 505. The cooperating element 505 may be a hardware device. The cooperating element 505 may be a process that can be loaded into the memory 504 and executed by the processor 502 to implement various functions presented herein (in which case, for example, the cooperating element 505 (including associated data structures) can be stored on a non-transitory computer readable medium, such as a storage device or other suitable type of storage element (e.g., a magnetic drive, an optical drive, or the like)).

The computer 500 also may include one or more input/output devices 506. The input/output devices 506 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 500 may represent a general architecture and functionality suitable for implementing functional elements described herein, portions of functional elements described herein, or the like, as well as various combinations thereof. For example, the computer 500 may provide a general architecture and functionality that is suitable for implementing one or more elements presented herein, such as a customer premises gateway device 120 or a portion thereof, a customer premises equipment 130 or a portion thereof (including smartphone 130-S or a portion thereof), an element of the broadband access network 140 or a portion thereof, an element of the wireless access network 150 or a portion thereof, an element of the communication network 160 or a portion thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are j oined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus comprising means for:
receiving, at a client device, a notification of an intention of a customer premises gateway device to communicate via the client device;
deactivating, at the client device, a wireless connection from the client device to the customer premises gateway device;
activating, at the client device, a wireless hotspot of the client device; and
supporting, at the client device using the wireless hotspot of the client device, connection of the customer premises gateway device to the client device.

2. The apparatus according to claim 1, wherein the notification of the intention of the customer premises gateway device to communicate via the client device is based on a condition associated with a broadband connection from the customer premises gateway device to a broadband communication network.

3. The apparatus according to any of claims 1 to 2, further comprising means for:
supporting, by the client device, communication of traffic for a set of customer premises equipments supported by the customer premises gateway device via the wireless hotspot of the client device and a wide area wireless connection of the client device to a wireless access network.

4. The apparatus according to any of claims 1 to 3, further comprising means for:
sending, by the client device toward the customer premises gateway device, an indication of an availability of the client device to provide the wireless hotspot for use by the customer premises gateway device in event of a condition associated with a broadband connection from the customer premises gateway device to a broadband communication network.

5. The apparatus according to any of claims 1 to 4, further comprising means for:
sending, by the client device toward the customer premises gateway device, telemetry of the client device.

6. The apparatus according to any of claims 1 to 5, further comprising means for:
supporting, at the client device, a containerized application configured to control the detect, deactivate, and activate functions at the client device.

7. A method, comprising:
receiving, at a client device, a notification of an intention of a customer premises gateway device to communicate via the client device;
deactivating, at the client device, a wireless connection from the client device to the customer premises gateway device;
activating, at the client device, a wireless hotspot of the client device; and
supporting, at the client device using the wireless hotspot of the client device, connection of the customer premises gateway device to the client device.

8. An apparatus comprising means for:
sending, by a customer premises gateway device toward a client device in response to detection of a condition associated with a broadband connection from the customer premises gateway device to a broadband communication network, a notification of an intention of the customer premises gateway device to communicate via the client device;
switching, by the customer premises gateway device, a wireless radio of the customer premises gateway device from operating in an access mode to operating in a client mode; and
connecting, by the customer premises gateway device using the wireless radio of customer premises gateway device based on the client mode, to a wireless hotspot of the client device.

9. The apparatus according to claim 8, wherein the condition associated with the broadband connection from the customer premises gateway device to the broadband communication network includes an unavailability of the broadband connection from the customer premises gateway device to the broadband communication network or the broadband connection from the customer premises gateway device to the broadband communication network having a particular quality level.

10. The apparatus according to any of claims 8 to 9, further comprising means for:
supporting, by the customer premises gateway device, communication of traffic of a set of customer premises equipments supported by the customer premises gateway device via the wireless hotspot of the client device.

11. The apparatus according to any of claims 8 to 10, further comprising means for:
receiving, by the customer premises gateway device from the client device, an indication of an availability of the client device to provide the wireless hotspot for use by the customer premises gateway device; and
registering, by the customer premises gateway device, the client device as an available client device that is available to support the customer premises gateway device.

12. The apparatus according to any of claims 8 to 11, further comprising means for:
selecting, by the customer premises gateway device from a set of available client devices including the client device, the client device to provide the wireless hotspot for use by the customer premises gateway device.

13. The apparatus according to any of claims 8 to 12, further comprising means for:
receiving, by the customer premises gateway device from the client device, telemetry of the client device; and
selecting, by the customer premises gateway device based on the telemetry of the client device, the client device to provide the wireless hotspot for use by the customer premises gateway device.

14. The apparatus according to any of claims 8 to 13, further comprising means for:
controlling, by the customer premises gateway device while the customer premises gateway device is connected to the wireless hotspot of the client device, communications of customer premises equipments via the wireless hotspot of the client device based on at least one of a traffic type or a device type.

15. A method, comprising:
sending, by a customer premises gateway device toward a client device in response to detection of a condition associated with a broadband connection from the customer premises gateway device to a broadband communication network, a notification of an intention of the customer premises gateway device to communicate via the client device;
switching, by the customer premises gateway device, a wireless radio of the customer premises gateway device from operating in an access mode to operating in a client mode; and
connecting, by the customer premises gateway device using the wireless radio of customer premises gateway device based on the client mode, to a wireless hotspot of the client device.
